# EUROPÄISCHE PATENTSCHRIFT

(11) **EP 0 932 834 B1**
(45) Veröffentlichungstag und Bekanntmachung des Hinweises auf die Patenterteilung: **25.02.2004**
(21) Anmeldenummer: 97944683.8
(22) Anmeldetag: 27.08.1997
(51) Int. Cl.: G01S 5/10, H04H 3/00

(54) **VERFAHREN ZUR BESTIMMUNG VON EMPFÄNGERSTANDORTEN IN EINEM GLEICHWELLENNETZ**
METHOD OF DETERMINING RECEIVER LOCATIONS IN A COMMON WAVE NETWORK
PROCEDE POUR DETERMINER LES POSITIONS D'UN RECEPTEUR DANS UN RESEAU A FREQUENCE COMMUNE

(30) Priorität: 16.10.1996 DE 19642633
(43) Veröffentlichungstag der Anmeldung: 04.08.1999
(73) Patentinhaber: ROBERT BOSCH GMBH, 70442 Stuttgart (DE)
(72) Erfinder: SCHNEIDERS, Peter, D-31139 Hildesheim (DE); LAUTERBACH, Thomas, D-90475 Nürenberg (DE)
(86) Internationale Anmeldenummer: PCT/DE1997/001935
(87) Internationale Veröffentlichungsnummer: WO 1998/017023

(56) Entgegenhaltungen:
- DE-C- 4 223 194
- US-A- 4 667 202
- US-A- 5 515 062
- US-A- 5 526 357

## Beschreibung

### Stand der Technik

Die Erfindung geht aus von einem Verfahren zur Bestimmung von Empfängerstandorten in einem Gleichwellennetz nach der Gattung des Hauptanspruches.

Aus der DE 42 23 194 C1 ist ein Verfahren zur Bestimmung des Standortes eines Empfängers in einem Gleichwellennetz bekannt. Nach diesem Verfahren wird der Empfängerstandort zunächst ungefähr bestimmt, indem aus den Sendesignalen die Senderstandorte ermittelt werden. Anschließend wird mit einem Phasenvergleichs-Hyperbelverfahren die Phasendifferenz von Einzelträgerfrequenzen des digitalen Sendesignals ausgewertet. Aus dieser Phasendifferenz kann eine Laufzeitdifferenz der Signale zwischen den bekannten Senderstandorten errechnet werden. Zur Ermittlung der Phasenunterschiede werden in diesem Verfahren die Frequenzen der Frequenzkämme von empfangenen Sendern ausgewertet. Durch die Übertragungseigenschaften des Mobilfunkkanals wird die Ermittlung der Phasendifferenzen der Trägerpaare sehr ungenau. Bereits geringe Abweichungen in der Berechnung der Phasendifferenz führen zu großen Änderungen für den berechneten Standort.

### Vorteile der Erfindung

Das erfindungsgemäße Verfahren mit den kennzeichnenden Merkmalen des Anspruchs 1 hat demgegenüber den Vorteil, daß eine exaktere und genauere Positionsbestimmung des Empfängers möglich wird. Dazu geht man von der nach dem bekannten Verfahren ermittelten Laufzeitdifferenz von Signalen aus, wobei über eine Auswertung der Kanalimpulsantwort des Übertragungskanals eine Verbesserung der Laufzeitdifferenzmessung erreicht wird. Die auf bekannte Weise ermittelte erste Laufzeitdifferenz dient dazu, geeignete Referenzgrößen zu ermitteln.

Durch die in den abhängigen Ansprüchen 2 bis 4 aufgeführten Maßnahmen ist eine vorteilhafte Weiterbildung und Verbesserung des im Hauptanspruch angegebenen Verfahrens möglich.

Besonders vorteilhaft ist es, daß zur Berechnung der Kanalimpulsantwort des Übertragungskanals das im DAB (Digital Audio Broadcasting)-Rahmen übertragene Phasenreferenzsymbol ausgewertet wird.

Vorteilhafter Weise wird die erste Laufzeitdifferenz aus der Phasendifferenz der Trägerpaare der Sendererkennungs-Frequenzkämme entnommen.

Um die erste Laufzeitdifferenzmessung zu verbessern, wird die Phasendifferenz für alle eingetasteten Trägerpaare bestimmt und gemittelt. Vorteilhafter Weise werden Einzelmessungen, deren Wert sehr stark vom gemittelten Wert abweichen für die weitere Bestimmung der Laufzeitdifferenz verworfen.

Es ist von Vorteil, daß in den Spektren der Kanalimpulsantwort nach Signalen mit Abständen, die aus der ersten Laufzeitdifferenzmessung näherungsweise bekannt sind, gesucht wird. Diese Signale gehen in die Berechnung einer zweiten, wesentlich exakteren Laufzeitdifferenz ein.

### Zeichnung

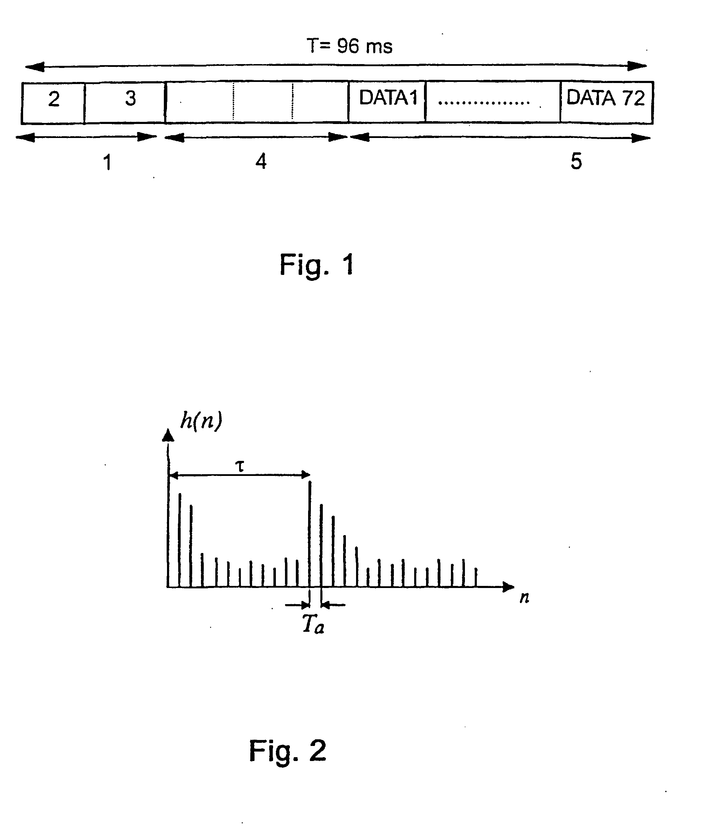

Ein Ausführungsbeispiel der Erfindung ist in der Zeichnung dargestellt und in der nachfolgenden Beschreibung näher erläutert. Es zeigt Figur 1 die Darstellung eines DAB-Datenrahmens und Figur 2 die Kanalimpulsantwort eines DAB-Signals.

### Beschreibung der Ausführungsbeispiele

In Figur 1 ist der DAB-Datenrahmen im Mode 1 dargestellt. Der Synchronisationskanal 1 dient zur Synchronisation von Sender und Empfänger. Im Synchronisationskanal 1 wird das Nullsymbol 2 sowie das Phasenreferenzsymbol (TFPR-Symbol) übertragen. Der Fast Information Channel (FIC 4) überträgt Informationen für die weitere Verwertung der Daten, die im Main Service Channel 5 übertragen werden.

Zunächst muß der Empfänger den Standort der Sender bestimmen, dessen Signale klar empfangen werden können. Dazu werden die Frequenzkämme ausgewertet, die im Nullsymbol 2 des DAB-Datenrahmens vom Sender ausgestrahlt werden. Diese Frequenzkämme sind über zwei Parameter c, der Frequenzkammnummer, und p, dem Frequenzkammmuster, eindeutig bestimmt und einem bestimmten Sender zuzuordnen. Nach Bestimmung der Sender, deren Signal klar empfangen werden kann, liegt für den Empfänger eine grobe Bestimmung seines Empfangsorts vor.

Zunächst werden die Phasendifferenzen für die Trägerpaare eines Frequenzkammes bestimmt. Dabei ist es von Vorteil, wenn von allen vier ausgestrahlten Trägerpaaren Phasenunterschiede bestimmt werden, und die Ergebnisse anschließend zu einem Mittelwert zusammengefaßt werden. Auf diese Weise können Fehlmessungen bei einem einzelnen Trägerpaar eliminiert werden, indem Werte, die sich sehr stark vom Mittelwert der Phasenunterschiede aller Trägerpaare unterscheiden, nicht weiter ausgewertet werden. Mit dem Wissen um die Phasendifferenzen werden die Entfernungsdifferenzen zwischen Empfänger und bekannten Sendern bestimmt. Dazu werden die ermittelten Laufzeitdifferenzen sowie die Informationen über die geografischen Positionen der Sender benutzt, um nach dem bekannten Hyperbelschnittverfahren die Koordinaten des Empfängers zu berechnen. Die Genauigkeit des gesamten Verfahrens hängt von der Genauigkeit der Ermittlung der Phasendifferenzen ab. Gerade aber die Ermittlung dieser Größe macht durch die realen Eigenschaften des Mobilfunkübertragungskanals Probleme. Die erfindungsgemäße, vorgeschlagene Möglichkeit, die Genauigkeit der gemessenen Laufzeitdifferenz zu erhöhen, ist die Auswertung der Kanalimpulsantwort des DAB-Übertragungssignals. Zur Ermittlung der Kanalimpulsantwort wird ein empfangenes Signal mit dem bekannten Signal verglichen. Erfindungsgemäß wird das empfangene TFPR-Symbol als Wertefolge komplexer Abtastwerte aus dem Synchronisationskanal 1 gewonnen. Um die frequenzabhängige Übertragungsfunktion h(f) zu bestimmen, wird das Empfangssignal mit dem komplex konjugierten Sendesignal multipliziert. Als komplex konjugiertes Sendesignal wird das originale TFPR-Symbol verwendet und konjugiert. Aus der Mulitplikation der beiden Signale erhält man die Übertragungsfunktion h(f), die durch Rücktransformation in den Zeitbereich die Kanalimpulsantwort h(t) bildet. Geht man von der zeitabhängigen Darstellung der Kanalimpulsantwort zur Darstellung als diskrete Übertragungsfunktion über, ergibt sich für die Kanalimpulsantwort des DAB-Signals das Bild in Figur 2. Man erkennt deutlich zwei Sendesignale mit einem Laufzeitunterschied τ. Der Abstand Tₐ ist der Zeitraum zwischen zwei Abtastungen des DAB-Signals. Durch Multiplikation der einzelnen komplexen Abtastwerte läßt sich die diskrete Übertragungsfunktion berechnen. Durch die inverse Fourriertransformation bestimmt man die diskrete Kanalimpulsantwort h(n).

Mit der berechneten Kanalimpulsantwort ist man in der Lage, den vorhandenen Übertragungskanal zu charakterisieren. Die Kanalimpulsantwort enthält die Informationen über empfangene Sendesignale, sowie deren Reflektionen. Da man nicht in der Lage ist, von vorneherein zu unterscheiden, ob es sich bei einem Peak innerhalb der Kanalimpulsantwort um ein direktes oder reflektiertes Sendesignal handelt, kann dies nur durch Kenntnis des Laufzeitunterschiedes zwischen zwei Sendesignalen unterschieden werden. Für diese Entscheidung wird das Ergebnis der ersten Laufzeitdifferenzmessung verwendet. Mit dieser Laufzeitdifferenz wird die Kanalimpulsantwort nach Peaks mit annähernd äquivalentem Lauftzeitunterschied untersucht. Finden sich zwei Signale im gewünschten Laufzeitdifferenzabstand, wird die Laufzeitdifferenz zwischen diesen Peaks ausgewertet. Bei diesem Verfahren bedingt das zeitliche Raster der Abtastung des DAB-Signals die Ungenauigkeit der Messung. Setzt man für die Ungenauigkeit der Laufzeitmessung bei Auswertung der Signale der Kanalimpulsantwort die variable Δτ = T_{a/2} an, so beträgt die Abweichung bei einer Abtastfrequenz von fₐ = 2.048 kHz 0,22 *µ*s. Für die Abweichung der Entfernungsdifferenz bedeutet dies einen Wert von 73,19 Metern. Dadurch liegt mit der Auswertung der Kanalimpulsantwort ein Verfahren vor, das eine genauere Bestimmung des Empfängerstandortes ermöglicht.

## Patentansprüche

1. Verfahren zur Bestimmung von Empfängerstandorten in einem digitalen Gleichwellennetz, wobei durch Auswertung der Phasenlage von diskreten Signalen gleicher Frequenz eine erste Laufzeitdifferenz zwischen Signalen verschiedener Sender und die aktuelle Position mit einem Phasenvergleichs-Hyperbelschnittverfahren bestimmt wird, **dadurch gekennzeichnet, daß** die Kanalimpulsantwort des übertragungskanals ermittelt wird, daß im Spektrum der Kanalimpulsantwort nach Signalen mit der ersten Laufzeitdifferenz gesucht wird und diese Signale zur Berechnung einer zweiten, verbesserten Laufzeitdifferenz ausgewertet werden.

2. Verfahren zur Bestimmung von Empfängerstandorten nach Anspruch 1, **dadurch gekennzeichnet, daß** die Kanalimpulsantwort aus dem im DAB-Rahmen übertragenen Phasenreferenzsymbol (TFPR') und dem im Empfänger bekannten Phasenreferenzsymbol (TFPR) berechnet wird.

3. Verfahren zur Bestimmung von Empfängerstandorten nach Anspruch 1 oder 2, **dadurch gekennzeichnet, daß** die erste Laufzeitdifferenz aus der Phasendifferenz der Trägerpaare der Senderkennungs-Frequenzkämme berechnet wird.

4. Verfahren zur Bestimmung von Empfängerstandorten nach Anspruch 1 bis 3, **dadurch gekennzeichnet, daß** die Phasendifferenzen für alle eingetasteten Trägerpaare bestimmt und diese über alle Trägerpaare gemittelt wird, und der gemittelte Wert mit dem der Einzelmessungen verglichen und bei starken Abweichungen der Einzelwert verworfen wird.

## Claims

1. Method for determining receiver locations in a digital simultaneous broadcasting network, where evaluation of the phase of discrete signals of the same frequency is used to determine a first propagation-time difference between signals from different transmitters and the current position using a phase-comparison hyperbolic-intersection method, **characterized in that** the channel impulse response of the transmission channel is ascertained, **in that** signals having the first propagation-time difference are sought in the spectrum of the channel impulse response, and these signals are evaluated in order to calculate a second, improved propagation-time difference.

2. Method for determining receiver locations according to Claim 1, **characterized in that** the channel impulse response is calculated from the phase reference symbol (TFPR') transmitted in the DAB frame and the phase reference symbol (TFPR) which is known in the receiver.

3. Method for determining receiver locations according to Claim 1 or 2, **characterized in that** the first propagation-time difference is calculated from the phase difference in the carrier pairs of the transmitter-identifier frequency combs.

4. Method for determining receiver locations according to Claims 1 to 3, **characterized in that** the phase differences are determined for all keyed-in carrier pairs and these are averaged over all carrier pairs, and the averaged value is compared with that for the individual measurements and the individual value is rejected in the event of large discrepancies.

## Revendications

1. Procédé pour déterminer des positions de récepteur dans un réseau à fréquence numérique commune, selon lequel, en exploitant la position de phase de signaux discrets de même fréquence, on détermine une première différence de temps de propagation entre des signaux de différents émetteurs et la position actuelle à l'aide d'une méthode des intersections d'hyperboles à comparaison de phase,
**caractérisé en ce que**
l'on établit la réponse d'impulsion du canal de transmission, dans le spectre de la réponse d'impulsion de canal ; l'on recherche des signaux qui présentent la première différence de temps de propagation et ces signaux sont exploités pour calculer une deuxième différence améliorée du temps de propagation.

2. Procédé pour déterminer des positions de récepteur selon la revendication 1,
**caractérisé en ce que**
la réponse d'impulsion de canal est calculée à partir du symbole de référence de phase (TFPR') transmis dans le cadre de la radiodiffusion numérique et à partir du symbole de référence de phase (TFPR) connu dans le récepteur.

3. Procédé pour déterminer des positions de récepteur selon la revendication 1 ou 2,
**caractérisé en ce que**
la première différence de temps de propagation est calculée à partir de la différence de phase des paires de porteurs pour les crêtes de fréquence de l'identification de l'émetteur.

4. Procédé pour déterminer des positions de récepteur selon la revendication 1 à 3,
**caractérisé en ce que**
l'on détermine les différences de phase pour toutes les paires de porteurs sélectionnées et l'on fait la moyenne de celles-ci sur toutes les paires de porteurs et la valeur moyenne est comparée avec celle des mesures particulières et la valeur particulière est rejetée en cas de trop grands écarts.
